# EUROPÄISCHE PATENTSCHRIFT

(11) **EP 1 272 267 B1**
(45) Veröffentlichungstag und Bekanntmachung des Hinweises auf die Patenterteilung: **04.02.2004**
(21) Anmeldenummer: 01929408.1
(22) Anmeldetag: 06.03.2001
(51) Int. Cl.: B01J 13/02, A01N 25/28

(54) **MIKROKAPSEL-SUSPENSIONEN**
MICROCAPSULE SUSPENSIONS
SUSPENSIONS EN MICROCAPSULES

(30) Priorität: 17.03.2000 DE 10013127; 27.11.2000 DE 10058878
(43) Veröffentlichungstag der Anmeldung: 08.01.2003
(73) Patentinhaber: Bayer CropScience AG, 40789 Monheim (DE)
(72) Erfinder: WOLF, Hilmar, 40764 Langenfeld (DE); SCHICK, Norbert, 42697 Solingen (DE); CHRISTENSEN, Björn, 51373 Leverkusen (DE); SUTY-HEINZE, Anne, 40764 Langenfeld (DE)
(86) Internationale Anmeldenummer: PCT/EP2001/002483
(87) Internationale Veröffentlichungsnummer: WO 2001/068234

(56) Entgegenhaltungen:
- DE-A- 19 840 582
- DE-A- 19 840 583
- DATABASE WPI Section Ch, Week 198337 Derwent Publications Ltd., London, GB; Class A97, AN 1983-762720 XP002172794 & RO 76 732 A (INST CHIM MACROMOLECULARA PETRU PONI), 28. Februar 1983 (1983-02-28)
- DATABASE WPI Section Ch, Week 198337 Derwent Publications Ltd., London, GB; Class A97, AN 1983-762721 XP002172795 & RO 76 733 A (INST CHIM MACROMOLECULARA PETRU PONI), 28. Februar 1983 (1983-02-28)

## Beschreibung

Die vorliegende Erfindung betrifft neue Mikrokapsel-Suspensionen, ein Verfahren zu deren Herstellung und deren Verwendung zur Applikation von agrochemischen Wirkstoffen.

Es sind bereits Mikrokapsel-Formulierungen bekannt geworden, die in den Kapseln Suspensionen von festen agrochemischen Wirkstoffen in organischen Lösungsmitteln beziehungsweise flüssigen agrochemischen Wirkstoffen enthalten (vgl. WO 95-13 698). Ungünstig an diesen Zubereitungen ist aber, dass die Freigabe der mikroverkapselten Wirkstoffe nicht in allen Fällen den Anforderungen der Praxis genügt. Außerdem tritt bei der Lagerung dieser Formulierungen ein Aufrahmen oder eine Sedimentation ein.

Es wurden nun neue Mikrokapsel-Suspensionen gefunden, bestehend aus
A) einer teilchenförmigen, dispersen Phase von Mikrokapseln, bei deren Hüllen es sich um Reaktionsprodukte von
   - Gemischen aus Toluylen-diisocyanat und 4,4'-Methylen-bis-(cyclohexyl-isocyanat) der Formel 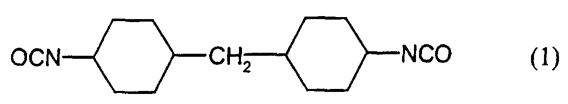 mit
   - mindestens einem Diamin und/oder Polyamin
   handelt,
   und
   die als Kapselfüllung
   - mindestens einen festen agrochemischen Wirkstoff aus der Gruppe
      der insektizid wirksamen Nicotinyle,
      der insektizid wirksamen Pyrethroide,
      der insektizid wirksamen Thiazol-Derivate,
      der insektizid wirksamen Phosphorsäure-Derivate,
      der fungizid wirksamen Azole,
      der herbizid wirksamen Triazolinone oder Benzonitrile und/oder
      der herbizid wirksamen Phenyluracile,
   - mindestens einen flüssigen, aliphatischen Kohlenwasserstoff mit einem Siedepunkt oberhalb von 160°C,
   - mindestens ein öllösliches, polymeres Dispergiermittel und
   - gegebenenfalls einen oder mehrere bei Raumtemperatur flüssige, agrochemische Wirkstoffe
   enthalten,
   und
B) einer flüssigen, wässrigen Phase, die neben Wasser
   - gegebenenfalls Zusatzstoffe
      und
   - gegebenenfalls einen oder mehrere weitere, bei Raumtemperatur feste, agrochemische Wirkstoffe in nicht verkapselter Form
   enthält.

Weiterhin wurde gefunden, dass sich erfindungsgemäße Mikrokapsel-Suspensionen herstellen lassen, indem man
a) in einem ersten Schritt eine feinteilige Suspension aus
   - mindestens einem festen agrochemischen Wirkstoff aus der Gruppe
      der insektizid wirksamen Nicotinyle,
      der insektizid wirksamen Pyrethroide,
      der insektizid wirksamen Thiazol-Derivate,
      der insektizid wirksamen Phosphorsäure-Derivate,
      der fungizid wirksamen Azole,
      der herbizid wirksamen Triazolinone oder Benzonitrile und/oder
      der herbizid wirksamen Phenyluracile,
   - mindestens einen flüssigen, aliphatischen Kohlenwasserstoff mit einem Siedepunkt oberhalb von 160°C,
   - mindestens einem öllöslichen, polymeren Dispergiermittel und
   - einem Gemisch aus Toluylen-diisocyanat und 4,4'-Methylen-bis(cyclohexyl-isocyanat) der Formel 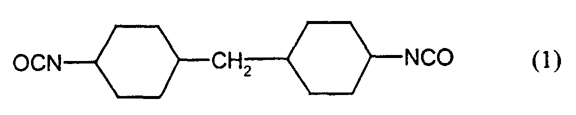
   - sowie gegebenenfalls einem oder mehreren bei Raumtemperatur flüssigen, agrochemischen Wirkstoffen,
      in einer wässrigen Phase aus
   - Polyvinylalkohol gegebenenfalls im Gemisch mit Gummi arabicum und
   - Wasser
   dispergiert,
b) der dabei anfallenden Mischung in einem zweiten Schritt mindestens ein Diamin und/oder Polyamin zufügt und
c) die erhaltene Mikrokapsel-Suspension gegebenenfalls in einem dritten Schritt
   - mit Zusatzstoffen und
   - gegebenenfalls mit einem oder mehreren weiteren, bei Raumtemperatur festen, agrochemischen Wirkstoffen in nicht verkapselter Form
   versetzt.

Schließlich wurde gefunden, dass die erfindungsgemäßen Mikrokapsel-Suspensionen sehr gut zur Applikation der enthaltenen agrochemischen Wirkstoffe auf Pflanzen und/oder deren Lebensraum geeignet sind.

Es ist als äußerst überraschend zu bezeichnen, dass die erfindungsgemäßen Mikrokapsel-Suspensionen besser zur Applikation der enthaltenen agrochemischen Wirkstoffe geeignet sind als die konstitutionell ähnlichsten, vorbekannten Zubereitungen. Unerwartet ist vor allem, dass sich von den zahlreichen infrage kommenden Isocyanaten speziell Gemische aus Toluylen-diisocyanat und 4,4'-Methylen-bis(cyclohexyl-isocyanat) der Formel (1) besonders gut zur Herstellung von Mikrokapsel-Suspensionen mit den gewünschen Eigenschaften einsetzen lassen.

Die erfindungsgemäßen Mikrokapsel-Suspensionen zeichnen sich durch eine Reihe von Vorteilen aus. So sind sie in der Lage, die aktiven Komponenten über einen längeren Zeitraum in der jeweils erforderlichen Menge freizusetzen. Günstig ist auch, dass die erfindungsgemäßen Mikrokapsel-Suspensionen eine hohe Stabilität aufweisen und auch bei längerer Lagerung weder aufrahmen noch sedimentieren.

Die erfindungsgemäßen Mikrokapsel-Suspensionen sind durch die in der teilchenförmigen, dispersen Phase und die in der wässrigen Phase enthaltenen Bestandteile charakterisiert.

Bei den Kapselhüllen der erfindungsgemäßen Mikrokapseln handelt es sich um Reaktionsprodukte von den unter (A) genannten Isocyanaten und Aminen.

Sowohl Toluylen-diisocyanat als auch 4,4'-Methylen-bis-(cyclohexylisocyanat) sind bekannt.

Als Amine der unter (A) aufgeführten Gruppen kommen vorzugsweise aliphatische und alicyclische primäre und sekundäre Diamine und Polyamine in Betracht. Als Beispiele genannt seien Ethylendiamin-(1,2), Diethylentriamin, Triethylentetramin, Bis-(3-aminopropyl)-amin, Bis-(2-methylaminoethyl)-methylamin, 1,4-Diamino-cyclohexan, 3-Amino-1-methylaminopropan, N-Methyl-bis-(3-aminopropyl)-amin, 1,4-Diamino-n-butan und 1,6-Diamino-n-hexan.

Ganz besonders bevorzugt ist Diethylentriamin.

Diese Diamine und Polyamine sind bekannte Verbindungen der organischen Chemie.

In den erfindungsgemäßen Mikrokapsel-Suspensionen können ein oder mehrere feste, agrochemische Wirkstoffe aus den unter (A) angegebenen Gruppen enthalten sein.

Als Beispiele für insektizid wirksame Nicotinyle seien Imidacloprid, Thiacloprid, Thiamethoxam und Acetamiprid genannt.

Als Beispiele für insektizid wirksame Pyrethroide seien Betacyfluthrin, Cypermethrin, Transfluthrin und Lambda-cyhalothrin genannt.

Als Beispiel für ein insektizid wirksames Thiazol-Derivat sei der Wirkstoff der Formel 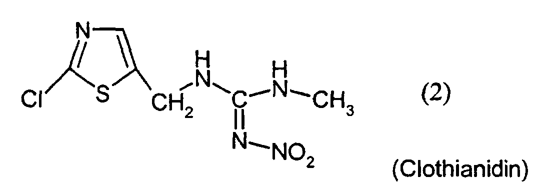 genannt.

Als Beispiel für ein insektizid wirksames Phosphorsäure-Derivat sei Azinphos-methyl genannt.

Als Beispiele für fungizid wirksame Azole seien Tebuconazole und 2-[2-(1-Chlorcyclopropyl)-3-(2-chlorphenyl)-2-hydroxy-propyl]-2,4-dihydro-[1,2,4]-triazol-3-thion genannt.

Als Beispiele für herbizid wirksame Triazolinone seien Propoxycarbazone-Natrium, Flucarbazone-Natrium und Amicabazone genannt.

Als Beispiel für ein herbizid wirksames Benzonitril sei Dichlobenil genannt.

Als Beispiele für herbizid wirksame Phenyluracile seien die Stoffe der Formel 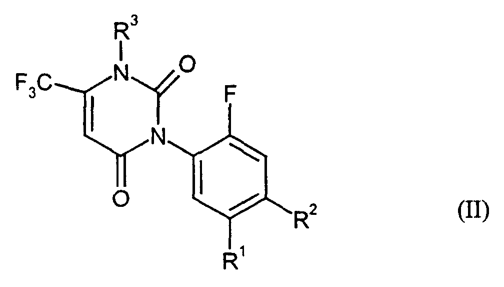 genannt, worin die Substituenten R¹, R² und R³ die nachstehend angegebenen Bedeutungen haben.

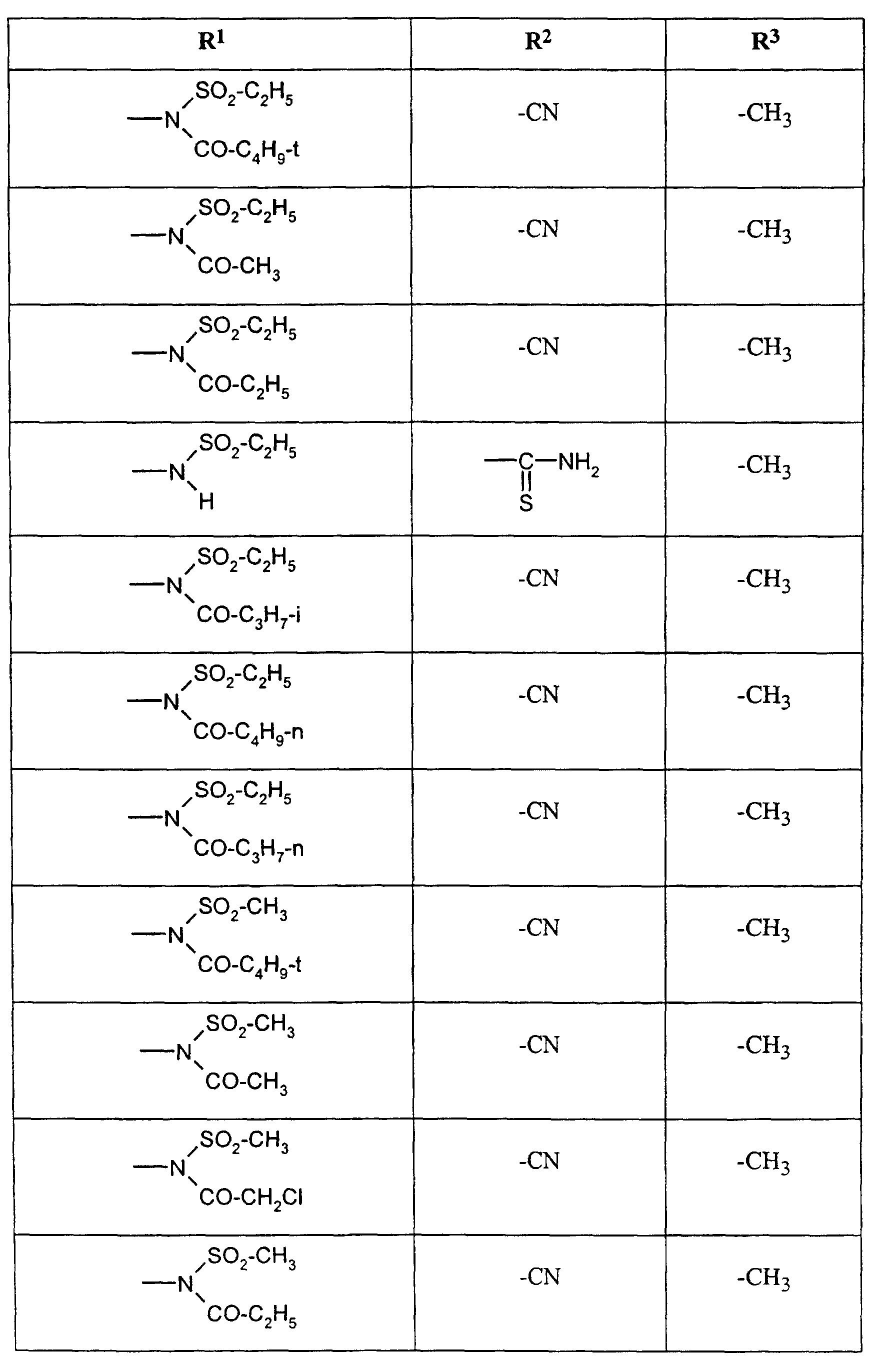

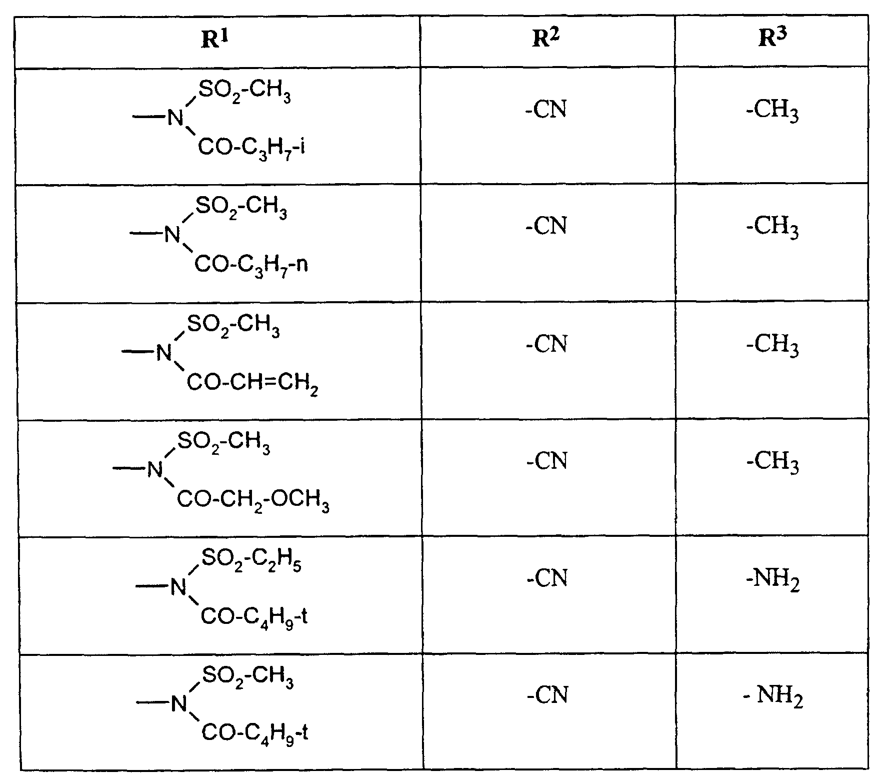

Die erfindungsgemäßen Mikrokapsel-Suspension enthalten im Innern der Kapseln mindestens einen flüssigen, aliphatischen Kohlenwaserstoff mit einem Siedepunkt oberhalb von 160°C. Als derartige Kohlenwasserstoffe kommen vorzugsweise Paraffinöle und Mineralöle in Betracht. Als Beispiele genannt seien die unter den Bezeichnungen Norpare (Fa. Exxon), Isopare (Fa. Exxon) und Exxsol (Fa. Exxon) bekannten Paraffinöle sowie das unter der Bezeichnung BP Enerpar T 017 (Fa. British Petrol) im Handel befindliche Mineralöl.

Die erfindungsgemäßen Mikrokapsel-Suspensionen enthalten im Innern der Kapseln mindestens ein öllösliches, polymeres Dispergiermittel. Als Beispiele für Dispergiermittel dieses Typs seien die unter den Bezeichnungen Atlox LP6 (Fa. Uniqema), Agrimer AL 22 (Fa. ISP Investments) und Hordaphos 215 (Fa. Clariant) bekannten Produkte genannt.

Außerdem können die erfindungsgemäßen Mikrokapsel-Suspensionen im Innem der Kapseln auch einen oder mehrere bei Raumtemperatur flüssige, agrochemische Wirkstoffe enthalten.

Die Teilchen der dispersen Phase weisen eine mittlere Partikelgröße auf, die im Allgemeinen zwischen 1 und 30 µm, vorzugsweise zwischen 3 und 15 µm liegt.

Die wässrige Phase der erfindungsgemäßen Mikrokapsel-Suspensionen besteht im Wesentlichen aus Wasser. Sie kann außerdem auch Zusatzstoffe, wie Emulgatoren, Dispergiermittel, Polyvinylalkohol, Gemische von Polyvinylalkohol und Gummi arabicum, Entschäumer, Konservierungsmittel und Verdicker enthalten.

Die wässrige Phase der erfindungsgemäßen Mikrokapsel-Suspensionen kann außerdem auch einen oder mehrere, bei Raumtemperatur feste, agrochemische Wirkstoffe in nicht verkapselter Form enthalten.

Als Emulgatoren und Dispergiermitel kommen hierbei vorzugsweise nicht-ionische und anionische Stoffe mit oberflächenaktiven Eigenschaften in Betracht.

Als Beispiele für nicht-ionische Emulgatoren seien die unter den Bezeichnungen Pluronic PE 10 100 (Fa. BASF) und Atlox 4913 (Fa. Uniqema) bekannten Produkte genannt. Ferner infrage kommen Tristyryl-phenol-ethoxylate. Als Beispiele für anionische Emulgatoren seien das unter der Bezeichnung Baykanol SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor SLK und Soprophor 4D 384 (Fa. Rhodia) speziell genannt seien.

Polyvinylalkohol oder Gemische von Polyvinylalkohol mit Gummi arabicum können als Schutzkolloide enthalten sein.

Als Verdicker kommen alle üblicherweise für diesen Zweck in Pflanzenbehandlungsmitteln einsetzbaren Stoffe infrage. Bevorzugt sind Kelzan® (thixotropes Verdickungsmittel auf Xanthan-Basis), Kieselsäuren und Attapulgit.

Als Konservierungsmittel kommen alle üblicherweise für diesen Zweck in Pflanzenbehandlungsmitteln vorhandenen Substanzen in Betracht. Als Beispiele genannt seien Preventol® (Bayer AG) und Proxel®.

Als Entschäumer kommen alle üblicherweise für diesen Zweck in Pflanzenbehandlungsmitteln einsetzbaren Stoffe infrage. Vorzugsweise genannt seien Silan-Derivate, wie Poly-dimethylsiloxane und Magnesiumstearat.

Als agrochemische Wirkstoffe, die in der wässrigen Phase in nicht verkapselter Form vorhanden sein können, kommen Fungizide, Insektizide und Herbizide in Frage, die bei Raumtemperatur fest sind.
Bevorzugte fungizide Wirkstoffe sind dabei Carpropamid, Fenhexamid, Iprovalicarb, Triadimefon, Triadimenol, Bitertanol, Dichlobutrazol, Tebuconazol, Difenoconazol, Cyproconazol, Flutriafol, Hexaconazol, Myclobutanil, Bromuconazol, Epoxiconazol, Fenbuconazol, Ipconazol, Fluquinconazol, Triticonazol, Imibenconazol, Imazalil, Pencycuron, Kresoxim-methyl, Azoxystrobin, Trifloxystrobin, Probenazole, Isoprothiolane, Tricyclazole, Dicyclocymet und Phthalide.

### Als bevorzugte insektizide Wirkstoffe seien genannt:

Azinphos-methyl, Aminocarb, 2-sek-Butyl-phenyl-methylcarbamat, Carbaryl, Carbofuran, Isoprocarb, Methiocarb, Mexacarbate, Nabam, Nitrilacarb, Betacyfluthrin, Imidacloprid und Thiacloprid.

### Als bevorzugte herbizide Wirkstoffe seien genannt:

Metazachlor, Propachlor, Flufenacet und Metribuzin.

In der wässrigen Phase sind die agrochemischen Wirkstoffe in nicht verkapselter Form, vorzugsweise in anwendungsfertiger Formulierung als Suspension enthalten.

Die Zusammensetzung der erfindungsgemäßen Mikrokapsel-Suspensionen kann innerhalb eines bestimmten Bereiches variiert werden. Der Anteil der dispersen, verkapselten Phase in Bezug auf die gesamte Formulierung liegt im Allgemeinen zwischen 5 und 70 Gew.-%, vorzugsweise zwischen 45 und 50 Gew.-%. Auch innerhalb der dispersen, verkapselten Phase kann der Anteil der einzelnen Bestandteile innerhalb eines bestimmten Bereiches variiert werden. So liegen in der dispersen Phase die Konzentrationen
- an Reaktionsprodukt von Gemischen aus Toluylen-diisocyanat und 4,4'-Methylen-bis-(cyclohexyl-isocyanat) mit Diamin und/oder Polyamin im allgemeinen zwichen 1 und 12 Gew.-%, vorzugsweise zwischen 2 und 10 Gew.-%,
- an festen, agrochemischen Wirkstoffen im Allgemeinen zwischen 10 und 90 Gew.-%, vorzugsweise zwischen 10 und 80 Gew.-%,
- an aliphatischem Kohlenwasserstoff im Allgemeinen zwischen 10 und 90 Gew.-%, vorzugsweise zwischen 30 und 70 Gew.-%,
- an öllöslichem, polymeren Dispergiermittel im Allgemeinen zwischen 1 und 15 Gew.-%, vorzugsweise zwischen 3 und 10 Gew.-% und
- an bei Raumtemperatur flüssigen, agrochemischen Wirkstoffen im Allgemeinen zwischen 0 und 20 Gew.-%, vorzugsweise zwischen 0 und 10 Gew.-%.

In der wässrigen Phase kann der Anteil an Zusatzstoffen innerhalb eines größeren Bereiches variiert werden. Die Konzentration an Zusatzstoffen liegt in Bezug auf die gesamte wässrige Phase im Allgemeinen zwischen 3 und 25 Gew.-%, vorzugsweise zwischen 5 und 20 Gew.-%.

Auch der Anteil an agrochemischen, nicht verkapselten Wirkstoffen in der wässrigen Phase kann innerhalb eines größeren Bereiches variiert werden. So liegt die Konzentration an agrochemischen Wirkstoffen in Bezug auf die gesamte wässrige Phase im Allgemeinen zwischen 0 und 40 Gew.-%, vorzugsweise zwischen 0 und 30 Gew.-%.

Als bevorzugte erfindungsgemäße Mikrokapsel-Suspensionen, die sowohl in der dispersen Phase innerhalb der Mikrokapseln als auch in der wässrigen Phase jeweils einen agrochemischen Wirkstoff enthalten, seien die folgenden Formulierunnen genannt:
Suspension mit Imidacloprid in mikroverkapselter Form und Carpropamid in der wässrigen Phase in Form einer Suspension.
Suspension mit Imidacloprid in mikroverkapselter Form und Azinphos-methyl in der wässrigen Phase in Form einer Suspension.
Suspension mit Betacyfluthrin in mikroverkapselter Form und Betacyfluthrin in der wässrigen Phase.

Die Herstellung der erfindungsgemäßen Mikrokapsel-Suspensionen erfolgt nach der Verfahrensweise der Mikroverkapselung.

Im Allgemeinen geht man dabei so vor, dass man zunächst eine feinteilige Suspension aus
- mindestens einem gegebenenfalls vorgemahlenen, festen, agrochemischen Wirkstoff aus den angegebenen Gruppen,
- mindestens einem flüssigen, aliphatischen Kohlenwasserstoff mit einem Siedepunkt oberhalb von 160°C,
- mindestens einem öllöslichen, polymeren Dispergiermittel und
- einem Gemisch aus Toluylendiisocyanat und 4,4'-Methylen-bis-(cyclohexylisocyanat) sowie
- gegebenenfalls einem oder mehreren bei Raumtemperatur flüssigen agrochemischen Wirkstoffen
durch Vermischen der Komponenten herstellt.

Die Mengen an den einzelnen Bestandteilen werden dabei so gewählt, dass sie in der resultierenden dispersen Phase in den Konzentrationen vorliegen, die schon genannt wurden. Dabei kann das Verhältnis von Toluylen-diisocyanat zu 4,4'-Methylen-bis(cyclohexyl-isocyanat) der Formel (1) in einem bestimmten Bereich variiert werden. Auf 1 Gew.-Teil an Toluylen-diisocyanat setzt man im Allgemeinen zwischen 0,3 und 2 Gew.-Teile, vorzugsweise zwischen 0,5 und 1,5 Gew.-Teile an 4,4'-Methylenbis-(cyclohexyl-isocyanat) ein.

Die Temperaturen können bei der Herstellung der Suspension (= organische Phase) innerhalb eines bestimmten Bereiches variiert werden. Im Allgemeinen arbeitet man bei Temperaturen zwischen 10°C und 60°C, vorzugsweise zwischen 20°C und 50°C.

Weiterhin wird eine wässrige Phase hergestellt, indem man
- Polyvinylalkohol gegebenenfalls im Gemisch mit Gummi arabicum in
- Wasser
einrührt.

Die Mengen an den einzelnen Bestandteilen werden dabei wiederum so gewählt, dass sie in der resultierenden dispersen Phase in den Konzentrationen vorliegen, die schon genannt wurden. Dabei kann das Verhältnis von Polyvinylalkohol zu Gummi arabicum in einem bestimmten Bereich variiert werden. Auf 1 Gew.-Teil an Polyvinylalkohol setzt man im Allgemeinen zwischen 0 und 10 Gew.-Teile, vorzugsweise zwischen 0 und 5 Gew.-Teile an Gummi arabicum ein.

Die Temperaturen können auch bei der Herstellung der wässrigen Phase innerhalb eines bestimmten Bereiches variiert werden. Im Allgemeinen arbeitet man bei Temperaturen zwischen 20°C und 100°C, vorzugsweise zwischen 30°C und 90°C.

Danach wird die organische Phase unter intensivem Rühren oder Mischen in der wässrigen Phase dispergiert.

Zur Herstellung der Dispersionen können alle für derartige Zwecke üblichen Apparate eingesetzt werden, die starke Scherkräfte erzeugen. Beispielhaft genannt seien Rotor-Stator-Mischer und Strahldispergatoren.

Die Temperaturen können auch bei der Herstellung der Dispersionen in einem bestimmten Bereich variiert werden. Im Allgemeinen arbeitet man bei Temperturen zwischen 10°C und 40°C, vorzugsweise zwischen 10°C und 30°C.

Die im ersten Schritt hergstellte Dispersion wird im zweiten Schritt des erfindungsgemäßen Verfahrens unter langsamem Rühren mit mindestens einem Diamin und/oder Polyamin versetzt und dann bis zur Beendigung der eintretenden Mikroverkapselungs-Reaktion weitergerührt.

Als Reaktionskomponenten kommen hierbei vorzugsweise alle diejenigen Diamine und Polyamine in Betracht, die schon im Zusammenhang mit der Beschreibung der erfindungsgemäßen Mikrokapsel-Suspensionen als bevorzugt genannt wurden.

Bei der Durchführung dieses zweiten Schrittes des erfindungsgemäßen Verfahrens kann das Verhältnis von Isocyanat zu Amin-Komponente in einem bestimmten Bereich variiert werden. Im Allgemeinen setzt man auf 1 mol an Isocyanat 0,8 bis 1,5 Äquivalente an Amin-Komponente ein. Bevorzugt wählt man die Mengen an Isocyanat und Amin so, dass äquimolare Mengen an Isocyanat- und Amino-Gruppen vorhanden sind.

Die Reaktionstemperaturen können bei der Durchführung der zweiten Stufe des erfindungsgemäßen Verfahrens innerhalb eines bestimmten Bereiches variiert werden. Im Allgemeinen arbeitet man bei Temperaturen zwischen 40°C und 80°C, vorzugsweise zwischen 50°C und 70°C.

Im dritten Schritt des erfindungsgemäßen Verfahrens wird die zuvor hergestellte Mikrokapsel-Suspension gegebenenfalls noch unter Rühren mit Zusatzstoffen sowie gegebenenfalls mit weiteren festen, agrochemischen Wirkstoffen in nicht verkapselter Form versetzt, wobei letztere vorzugsweise in Form von Suspensionskonzentraten hinzugefügt werden.

Als Zusatzstoffe kommen dabei Verdicker, Konservierungsmittel, Entschäumer und Dispergiermittel in Betracht. Vorzugsweise verwendbar sind diejenigen Substanz, die bereits im Zusammenhang mit der Beschreibung der erfindungsgemäßen Mikrokapsel-Suspensionen als bevorzugte Verdicker, Konservierungsmittel, Entschäumer und Dispergiermittel genannt wurden. Als agrochemische Wirkstoffe kommen dabei diejenigen in Frage, die bereits im Zusammenhang mit der Beschreibung der erfindungsgemäßen Mikrokapsel-Suspensionen als agrochemische Bstandteile der wässrigen Phase genannt wurden.

Die Temperaturen können bei der Durchführung des dritten Schrittes des erfindungsgemäßen Verfahrens wiederum innerhalb eines bestimmten Bereiches variiert werden. Im Allgemeinen arbeitet man bei Temperaturen zwischen 10°C und 50°C, vorzugsweise zwischen 10°C und 40°C.

Das erfindungsgemäße Verfahren wird im Allgemeinen unter Atmosphärendruck durchgeführt.

Nach der zuvor angegebenen Weise lassen sich erfindungsgemäße Mikrokapsel-Suspensionen in Mengen von etwa 500 ml problemlos herstellen. Ist die Zubereitung größerer Mengen gewünscht, so führt man das erfindungsgemäße Verfahren zweckmäßigerweise kontinuierlich durch. Dazu geht man im Allgemeinen so vor, dass man die organische Phase und die wässrige Phase aus getrennten Vorratsgefäßen mit Hilfe von zwei Pumpen in der jeweils gewünschten, genau dosierten Menge zusammenführt, dann in einer Dispergiervorrichtung unter Verwendung eines Rotor/Stator-Mischers dispergiert, diese Dispersion kontinuierlich in ein weiteres Gefäß leitet und durch Versetzen mit Amin reagieren lässt und die dabei entstehende Mikrokapsel-Suspension gegebenenfalls anschließend noch mit Zusatzstoffen sowie gegebenenfalls noch mit festen, agrochemischen Wirkstoffen, vorzugsweise in Form von handelsüblichen Suspensionskonzentraten, versetzt.

Die erfindungsgemäßen Mikrokapsel-Suspensionen eignen sich hervorragend zur Applikation der enthaltenen agrochemischen Wirkstoffe auf Pflanzen und/oder deren Lebensraum. Sie gewährleisten die Freisetzung der aktiven Komponenten in der jeweils gewünschten Menge über einen längeren Zeitraum.

Die erfindungsgemäßen Mikrokapsel-Suspensionen können entweder als solche oder nach vorherigem Verdünnen mit Wasser in der Praxis eingesetzt werden. Die Anwendung erfolgt dabei nach üblichen Methoden, also z.B. durch Gießen, Verspritzen oder Versprühen. Es ist jedoch auch möglich, die wässrige Phase zu entfernen und das verbleibende, freifließende Festprodukt nach üblichen Methoden auszubringen.

Die Aufwandmenge an den erfindungsgemäßen Mikrokapsel-Suspensionen kann innerhalb eines größeren Bereiches variiert werden. Sie richtet sich nach den jeweiligen agrochemischen Wirkstoffen und nach deren Gehalt in den Mikrokapsel-Suspensionen.

Die Erfindung wird duch die folgenden Beispiele veranschaulicht.

### Herstellungsbeispiele

### Beispiel 1

a) Organische Phase
   320 g einer feingemahlenen Suspension aus 1534,4 g Imidacloprid, 300 g Atlox LP6 und 1175,6 g Mineralöl (PB Enerpar T 017) werden mit 16,4 g Toluylen-diisocyanat und 12,4 g 4,4'-Methylen-bis-(cyclohexyl-isocyanat) unter Rühren bei Raumtemperatur vermischt.
b) Wässrige Phase
   12,0 g Polyvinylalkohol (Moviol 4-88) und 4 g Gummi arabicum werden unter Erwärmen auf 70°C und unter Rühren in 333,6 g entmineralisiertem Wasser gelöst. Danach wird die Lösung im Eisbad gekühlt.
c) Mikrokapsel-Suspension
   Die organische Phase und die wässrige Phase werden bei Raumtemperatur im Verhältnis von 48:52 in einer Menge von insgesamt 202 ml/min gefördert und mit einem Rotor-Stator-Mischer bei 20 000 Umdrehungen pro Minute emulgiert. Die erhaltene Emulsion wird bei Temperaturen unterhalb von 20°C mit 20 g einer 50 gewichtsprozentigen Lösung von Diethylentriamin in Wasser versetzt, dann unter Rühren innerhalb von einer Stunde auf 55°C erhitzt und anschließend 20 Stunden bei 55°C gerührt. Nach dem Abkühlen auf Raumtemperatur werden 0,8 g Preventol D2, 0,8 g Preventol D7, 30 g Baykanol SL und 44 g einer 2 gew.-%igen Lösung von Kelzan S (Verdicker auf Xanthan-Basis) in Wasser hinzugefügt.
   Man erhält auf diese Weise 800 g einer Mikrokapsel-Suspension mit einem Imidacloprid-Gehalt von 20 Gew.-% und einer mittleren Partikelgröße von 11,4 µm.

### Beispiel 2

a) Organische Phase
   1000 g einer feingemahlenen Suspension aus 1016,26 g Imidacloprid, 200 g Atlox LP6 und 783,74 g Mineralöl (BP Enerpar T 017) werden mit 47,07 g Toluylen-diisocyanat und 35,43 g 4,4'-Methylen-bis-(cyclohexyl-isocyanat) unter Rühren bei Raumtemperatur vermischt.
b) Wässrige Phase
   12,5 g Polyvinylalkohol (Moviol 4-88) und 62,5 g Gummi arabicum werden unter Erwärmen auf 70°C und unter Rühren in 1282,5 g entmineralisiertem Wasser gelöst. Danach wird die Lösung auf Raumtemperatur abgekühlt.
c) Mikrokapsel-Suspension
   Die organische Phase und die wässrige Phase werden bei Raumtemperatur im Verhältnis von 48:52 mit Hilfe von Pumpen in ein Reaktionsgefäß gefördert und mit einem Rotor-Stator-Mischer bei 20 000 Umdrehungen pro Minute emulgiert. Die erhaltene Emulsion wird bei einer Temperatur von etwa 15°C mit einem Gemisch aus 27,5 g Diethylentriamin und 27,5 g Wasser versetzt, dann unter Rühren innerhalb von einer Stunde auf 50°C erhitzt und anschließend 20 Stunden bei 50°C gerührt. Nach dem Abkühlen auf Raumtemperatur werden 2,5 g Preventol D2, 2,5 g Preventol D7, 56,25 g Soprophor 4D 384, 56,25 g Pluronic PE 10 100 und 75 g einer 2 gew.-%igen Lösung von Kelzan S (Verdicker auf Xanthan-Basis) in Wasser hinzugefügt.
   Man erhält auf diese Weise eine Mikrokapsel-Suspension mit einem Imidacloprid-Gehalt von 18,44 Gew.-% und einer mittleren Partikelgröße von 11,8 µm.

### Beispiel 3

829,2 g der Mikrokapsel-Suspension gemäß Beispiel 2 werden bei Raumtempratur unter Rühren mit 712,4 g eines handelsüblichen Suspensionskonzentrates, das zu
40 Gew.-% aus Carpropamid,
7 Gew.-% aus Emulgatoren und Dispergiermitteln,
10 Gew.-% aus Frostschutzmittel, Konservierungsmittel und Verdicker sowie zu
43 Gew.-% aus Wasser besteht,
und mit
57,4 g entmineralisiertem Waser vermischt. Man erhält auf diese Weise eine Kombinationsformulierung von
- verkapselten Imidachloprid (100 g/l) und
- unverkapselten Carpropamid (191 g/l)
mit einer Dichte von 1,085 g/ml.

### Verwendungsbeispiele

### Beispiel A

### Freisetzung von Wirkstoff

Es wird jeweils eine definierte Menge an Formulierung, die Imidacloprid als Wirkstoff enthält, in 500 ml Wasser suspendiert und dann bei Raumtemperatur belassen. Nach 48 Stunden werden jeweils 5 ml entnommen und zur Abtrennung der festen Bestandteile filtriert. In der wässrigen Phase wird anschließend mit Hilfe der HPLC-Methode der Gehalt an Imidacloprid bestimmt.

Die Versuchsergebnisse gehen aus der folgenden Tabelle hervor.

**Tabelle A**

| Freisetzung von Wirkstoff | | |
|---|---|---|
| Formulierung gemäß Beispiel Nr. | Einwaage an Formulierung | Gehalt an Imidacloprid in der wässrigen Phase |
| Erfindungsgemäß | | |
| 1 | 2,7 g | 5,3 ppm |
| 2 | 2,5 g | 6,0 ppm |
| 3 | 4,4 g | 10,5 ppm |
| Bekannt | | |
| Handelsübliche Suspension | 0,5 g | 501 ppm* |

| | | |
|---|---|---|
| * Der Gehalt an Imidacloprid wurde bereits nach zweistündigem Stehen der verdünnten Formulierung gemessen. | | |

### Beispiel B

### Verträglichkeitstest

Jeweils 12 g Reiskörner der Sorte Kusabue werden gleichmäßig in 10 cm x 10 cm große Schalen ausgesät, deren Boden bis zu einer Höhe von 4 cm mit Erde bedeckt ist. Vor dem anschließenden Bedecken der Reiskörner mit einer 1 cm hohen Erdschicht werden pro Schale jeweils 28 ml an Formulierung, welche die jeweils angegebene Menge an Wirkstoff enthält, durch Gießen über die gesamte Fläche gleichmäßig appliziert.

Danach werden die Schalen in eine Kammer gestellt, in der tagsüber eine Temperatur von 24°C und nachts eine Temperatur von 15°C herrscht.

28 Tage nach der Aussaat werden die Pflanzen auf Schäden untersucht. Ermitelt werden jeweils Nekrosen, Vergilbungen, Wuchsstörungen und Deformationen. Die Summe aller Schädden wird in Prozent ausgedrückt. Dabei bedeutet 0 %, dass keine Schäden auftreten, während 100 % bedeutet, dass die Pflanzen den jeweiligen Schaden vollständig aufweisen.

Die eingesetzten Präparate, Aufwandmengen an Wirkstoff und die Versuchsergebnisse gehen aus den folgenden Tabellen hervor.

**Tabelle B-1**

| Verträglichkeitstest | | |
|---|---|---|
| Formulierung gemäß Beispiel | Aufwandmenge an Wirkstoff | Summe der Schäden in % |
| Bekannt | | |
| A | 24 mg | 20 |
| | 48 mg | 30 |
| | 120 mg | 60 |
| Erfindungsgemäß | | |
| 1 | 24 mg | 15 |
| | 48 mg | 13 |
| | 120 mg | 18 |
| A = Handelsübliche Formulierung von Imidacloprid (nicht verkapselt) | | |

**Tabelle B-2**

| Verträglichkeitstest | | |
|---|---|---|
| Formulierung gemäß Beispiel | Aufwandmenge an Wirkstoff Imidacloprid/Carpropamid | Summe der Schäden in % |
| Bekannt | | |
| B | 24 mg/40 mg | 10 |
| | 48 mg/80 mg | 15 |
| | 120 mg/200 mg | 35 |
| erfindungsgemäß | | |
| 3 | 24 mg/40 mg | 5 |
| | 48 mg/80 mg | 5 |
| | 120 mg/200 mg | 10 |
| B = Handelsübliche Formulierung von Imidacloprid und Carpropamid (jeweils nicht verkapselt) | | |

## Patentansprüche

1. Mikrokapsel-Suspensionen, bestehend aus
A) einer teilchenförmigen, dispersen Phase von Mikrokapseln, bei deren Hüllen es sich um Reaktionsprodukte von
- Gemischen aus Toluylen-diisocyanat und 4,4'-Methylen-bis(cyclohexyl-isocyanat) der Formel 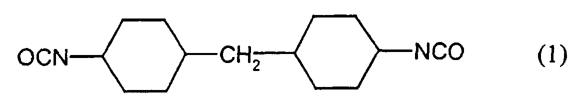 mit
- mindestens einem Diamin und/oder Polyamin
handelt,
und
die als Kapselfüllung
- mindestens einen festen agrochemischen Wirkstoff aus der Gruppe
der insektizid wirksamen Nicotinyle,
der insektizid wirksamen Pyrethroide,
der insektizid wirksamen Thiazol-Derivate,
der insektizid wirksamen Phosphorsäure-Derivate,
der fungizid wirksamen Azole,
der herbizid wirksamen Triazolinone oder Benzonitrile und/oder
der herbizid wirksamen Phenyluracile,
- mindestens einen flüssigen, aliphatischen Kohlenwasserstoff mit einem Siedepunkt oberhalb von 160°C,
- mindestens ein öllösliches, polymeres Dispergiermittel und
- gegebenenfalls einen oder mehrere bei Raumtemperatur flüssige, agrochemische Wirkstoffe
enthalten,
und
B) einer flüssigen, wässrigen Phase, die neben Wasser
- gegebenenfalls Zusatzstoffe
und
- gegebenenfalls einen oder mehrere weitere, bei Raumtemperatur feste, agrochemische Wirkstoffe in nicht verkapselter Form
enthält.

2. Verfahren zur Herstellung von Mikrokapsel-Suspensionen gemäß Anspruch 1, **dadurch gekennzeichnet, dass** man
a) in einem ersten Schritt eine feinteilige Suspension aus
- mindestens einem festen agrochemischen Wirkstoff aus der Gruppe
der insektizid wirksamen Nicotinyle,
der insektizid wirksamen Pyrethroide,
der insektizid wirksamen Thiazol-Derivate,
der insektizid wirksamen Phosphorsäure-Derivate,
der fungizid wirksamen Azole,
der herbizid wirksamen Triazolinone oder Benzonitrile und/oder
der herbizid wirksamen Phenyluracile,
- mindestens einen flüssigen, aliphatischen Kohlenwasserstoff mit einem Siedepunkt oberhalb von 160°C,
- mindestens einem öllöslichen, polymeren Dispergiermittel und
- einem Gemisch aus Toluylen-diisocyanat und 4,4'-Methylen-bis-(cyclohexyl-isocyanat) der Formel 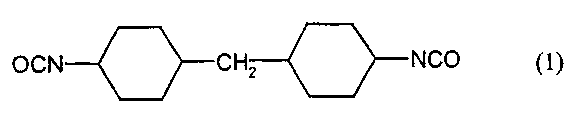
- sowie gegebenenfalls einem oder mehreren bei Raumtemperatur flüssigen, agrochemischen Wirkstoffen,
in einer wässrigen Phase aus
- Polyvinylalkohol gegebenenfalls im Gemisch mit Gummi arabicum und
- Wasser
dispergiert,
b) der dabei anfallenden Mischung in einem zweiten Schritt mindestens ein Diamin und/oder Polyamin zufügt und
c) die erhaltene Mikrokapsel-Suspension gegebenenfalls in einem dritten Schritt
- mit Zusatzstoffen und
- gegebenenfalls mit einen oder mehreren weiteren, bei Raumtemperatur festen, agrochemischen Wirkstoffen in nicht verkapselter Form
versetzt.

3. Verwendung von Mikrokapsel-Suspensionen gemäß Anspruch 1 zur Applikation der enthaltenen agrochemischen Wirkstoffe auf Pflanzen und/oder deren Lebensraum.

4. Mikrokapsel-Suspensionen gemäß Anspruch 1, **dadurch gekennzeichnet, dass** Imidacloprid in mikroverkapselter Form enthalten ist.

5. Mikrokapsel-Suspensionen gemäß Anspruch 1, **dadurch gekennzeichnet, dass** Carpropamid in der flüssigen, wässrigen Phase in unverkapselter Form enthalten ist.

6. Mikrokapsel-Suspensionen gemäß Anspruch 1, **dadurch gekennzeichnet, dass**
- Imidacloprid in mikroverkapselter Form und
- Carpropamid in unverkapselter Form
enthalten ist.

## Claims

1. Microcapsule suspensions, comprising
A) a particulate disperse phase of microcapsules, whose sleeves are reaction products of
- mixtures of toluylene diisocyanate and 4,4'-methylenebis(cyclohexyl isocyanate) of the formula 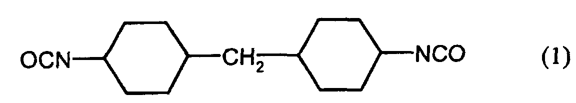 with
- at least one diamine and/or polyamine
and
which contain, as capsule filling,
- at least one solid agrochemically active compound from the group consisting of
the insecticidally active nicotinyls,
the insecticidally active pyrethroids,
the insecticidally active thiazole derivatives,
the insecticidally active phosphoric acid derivatives,
the fungicidally active azoles,
the herbicidally active triazolinones or benzonitriles and/or
the herbicidally active phenyluracils,
- at least one liquid aliphatic hydrocarbon having a boiling point above 160°C,
- at least one oil-soluble polymeric dispersing agent and
- optionally one or more agrochemically active compounds which are liquid at room temperature,
and
B) a liquid aqueous phase which, in addition to water, comprises
- optionally additives
and
- optionally one or more further agrochemically active compounds in non-encapsulated form which are solid at room temperature.

2. Process for preparing microcapsule suspensions according to Claim 1, **characterized in that**
a) in a first step, a finely divided suspension of
- at least one solid agrochemically active compound from the group consisting of
the insecticidally active nicotinyls,
the insecticidally active pyrethroids,
the insecticidally active thiazole derivatives,
the insecticidally active phosphoric acid derivatives,
the fungicidally active azoles,
the herbicidally active triazolinones or benzonitriles and/or
the herbicidally active phenyluracils,
- at least one liquid aliphatic hydrocarbon having a boiling point above 160°C,
- at least one oil-soluble polymeric dispersing agent and
- a mixture of toluylene diisocyanate and 4,4'-methylenebis(cyclohexyl isocyanate) of the formula 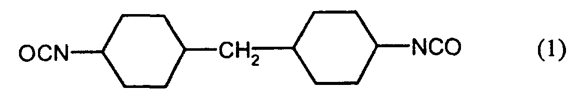
- and also, if appropriate, one or more agrochemically active compounds which are liquid at room temperature
is dispersed in an aqueous phase of
- polyvinyl alcohol, if appropriate in a mixture with gum arabic, and
- water,
b) in a second step, at least one diamine and/or polyamine is added to the resulting mixture and
c) optionally in a third step,
- additives and
- optionally one or more further agrochemically active compounds in non-encapsulated form which are solid at room temperature
are added to the resulting microcapsule suspension.

3. Use of microcapsule suspensions according to Claim 1 for applying the agrochemically active compounds contained therein to plants and/or their habitat.

4. Microcapsule suspensions according to Claim 1, **characterized in that** it comprises imidacloprid in microencapsulated form.

5. Microcapsule suspensions according to Claim 1, **characterized in that** it comprises carpropamid in non-encapsulated form in the liquid aqueous phase.

6. Microcapsule suspensions according to Claim 1, **characterized in that** it comprises
- imidacloprid in microencapsulated form and
- carpropamid in non-encapsulated form.

## Revendications

1. Suspensions de microcapsules, constituées
A) d'une phase particulaire dispersée de microcapsules, dont les enveloppes sont formées de produits de réaction
- de mélanges de diisocyanato-toluène et de 4,4'-méthylène-bis-(cyclohexyle-isocyanate) de formule 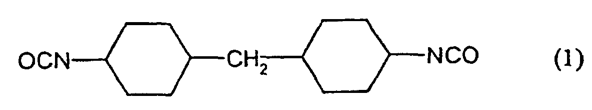 avec
- au moins une diamine et/ou une polyamine,
et
qui contiennent comme charge des capsules
- au moins une substance active agrochimique solide du groupe
des nicotinyles à activité insecticide,
des pyréthroïdes à activité insecticide,
des dérivés thiazoliques à activité insecticide,
des dérivés d'acide phosphorique à activité insecticide,
des azoles à activité fongicide,
des triazolinones ou des benzonitriles à activité herbicide,
et/ou
des phényluraciles à activité herbicide,
- au moins un hydrocarbure aliphatique liquide ayant un point d'ébullition au-dessus de 160°C,
- au moins un dispersant polymère soluble dans l'huile et
- le cas échéant, une ou plusieurs substances actives agrochimiques liquides à la température ambiante,
et
B) d'une phase aqueuse liquide qui contient, en complément de l'eau
- éventuellement des additifs et
- le cas échéant, une ou plusieurs autres substances actives agrochimiques solides à la température ambiante, sous une forme non encapsulée.

2. Procédé de production de suspensions de microcapsules suivant la revendication 1, **caractérisé en ce que** :
a) on disperse dans une première étape une suspension de fines particules, formée
- d'au moins une substance active agrochimique solide du groupe
des nicotinyles à activité insecticide,
des pyréthroïdes à activité insecticide,
des dérivés thiazoliques à activité insecticide,
des dérivés d'acide phosphorique à activité insecticide,
des azoles à activité fongicide,
des triazolinones ou des benzonitriles
à activité herbicide,
et/ou
des phényluraciles à activité herbicide,
- d'au moins un hydrocarbure aliphatique liquide ayant un point d'ébullition au-dessus de 160°C,
- d'au moins un dispersant polymère soluble dans l'huile et
- d'un mélange de diisocyanato-toluène et de 4,4'-méthylène-bis-(cyclohexyle-isocyanate) de formule 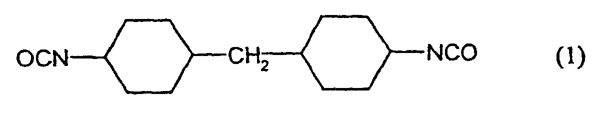
- ainsi que, le cas échéant, d'une ou plusieurs substances actives agrochimiques liquides à la température ambiante,
dans une phase aqueuse formée
- d'un polymère d'alcool vinylique éventuellement en mélange avec de la gomme arabique et
- d'eau,
b) on ajoute au mélange ainsi obtenu, dans une deuxième étape, au moins une diamine et/ou une polyamine, et
c) on ajoute éventuellement dans une troisième étape à la suspension de microcapsules obtenue
- des additifs et
- le cas échéant, une ou plusieurs autres substances actives agrochimiques solides à la température ambiante, sous une forme non encapsulée.

3. Utilisation de suspensions de microcapsules suivant la revendication 1, pour l'application des substances actives agrochimiques qu'elles contiennent à des plantes et/ou à leur milieu.

4. Suspensions de microcapsules suivant la revendication 1, **caractérisées en ce que** de l'imidaclopride est contenue sous la forme microencapsulée.

5. Suspensions de microcapsules suivant la revendication 1, **caractérisées en ce que** du carpropamide est contenu dans la phase aqueuse liquide sous la forme non encapsulée.

6. Suspensions de microcapsules suivant la revendication 1, **caractérisées en ce que**
- de l'imidaclopride est contenue sous la forme microencapsulée et
- du carpropamide est contenu sous la forme non encapsulée.
